(19) Europäisches Patentamt / European Patent Office / Office européen des brevets

(11) **EP 2 230 754 B1**

(12) **FASCICULE DE BREVET EUROPEEN**

(45) Date de publication et mention de la délivrance du brevet:
**29.04.2015 Bulletin 2015/18**

(51) Int Cl.:
***H02M 1/16*** *(2006.01)*

(21) Numéro de dépôt: **10154445.0**

(22) Date de dépôt: **23.02.2010**

(54) **Alimentation à découpage**

Schaltnetzteil

Switching mode power supply

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **18.03.2009 FR 0951725**

(43) Date de publication de la demande:
**22.09.2010 Bulletin 2010/38**

(73) Titulaire: **STMicroelectronics (Tours) SAS 37100 Tours (FR)**

(72) Inventeurs:
- **Rivet, Bertrand 37210 Vouvray (FR)**

- **Peron, Benoît 37000 Tours (FR)**
- **Hamadou, Aurélien 37000 Tours (FR)**

(74) Mandataire: **de Beaumont, Michel Cabinet Beaumont 1, rue Champollion 38000 Grenoble (FR)**

(56) Documents cités:
**WO-A-95/34120        JP-A- 9 233 808 US-B2- 6 987 379**

Printed by Jouve, 75001 PARIS (FR)

## Description

Domaine de l'invention

La présente invention concerne de façon générale les circuits électroniques et plus particulièrement les convertisseurs de puissance dits à découpage, également appelés alimentations à découpage.

Exposé de l'art antérieur

Un convertisseur à découpage utilise des éléments inductifs, associés à un interrupteur de puissance et à une diode de roue libre, pour effectuer une conversion d'énergie, généralement à partir d'une tension d'entrée généralement continue, ou alternative lorsqu'une correction du facteur de puissance est souhaitée. Cette tension d'entrée est le plus souvent obtenue par redressement d'une tension alternative, typiquement, la tension secteur du réseau de distribution électrique. Le convertisseur fournit une tension continue régulée par rapport à une valeur de consigne. On connaît des convertisseurs abaisseurs de tension (BUCK), élévateurs de tension (BOOST) et mixtes (abaisseur-élévateur).

Les convertisseurs comportent généralement un circuit d'aide à la commutation et un circuit de commande de l'interrupteur de puissance. Le circuit de commande contrôle le rapport cyclique du découpage de la tension d'entrée pour que la tension de sortie corresponde à la valeur de consigne souhaitée. Le circuit d'aide à la commutation vise, entre autres, à réduire les pertes d'énergie.

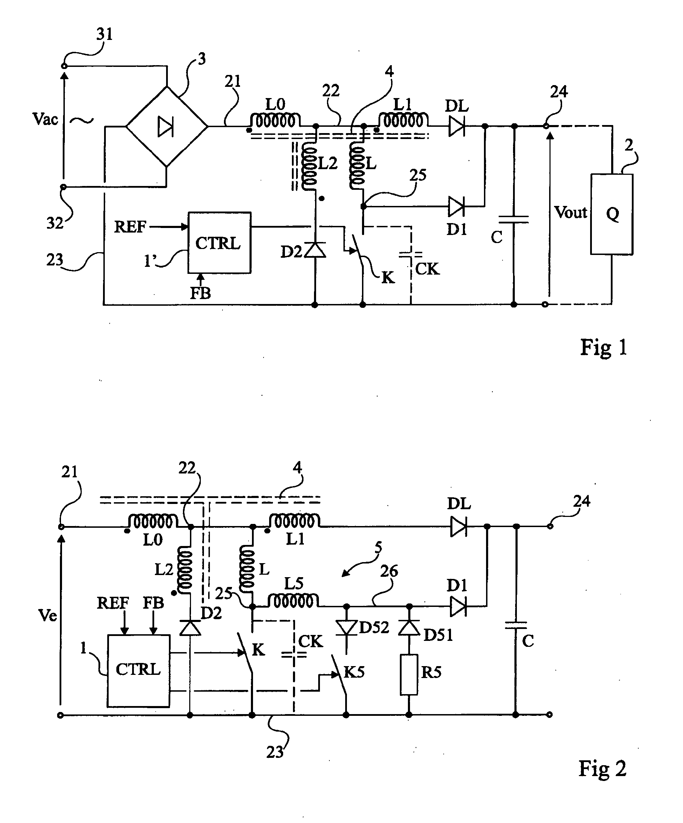

La figure 1 représente un schéma simplifié d'un exemple de convertisseur élévateur connu associé à son circuit d'aide à la commutation. Un tel convertisseur à circuit d'aide à la commutation est décrit dans le brevet américain 6,987,379 (01-TO-036 - B5059).

Ce convertisseur élévateur comporte un interrupteur K commandé par un circuit 1' (CTRL), par exemple, un circuit de commande par modulation de largeur d'impulsion (PWM) à partir d'une référence de tension souhaitée REF et d'une valeur FB mesurée de la tension de sortie continue Vout fournie à une charge 2 (Q). Une inductance L0 d'accumulation d'énergie est connectée, par une première borne 21, à une première borne d'application d'une tension d'entrée alternative redressée. La borne 21 correspond généralement à la borne de sortie redressée positive d'un pont de redressement 3 dont les bornes d'entrée alternative sont reliées à des bornes 31 et 32 d'application d'une tension alternative d'alimentation Vac (par exemple, la tension secteur). Une deuxième borne 22 de l'inductance L0 est reliée à une borne 23 d'application d'un potentiel de référence, par une inductance L de contrôle du di/dt en série avec l'interrupteur K. Le potentiel de référence est commun à l'entrée continue et à la sortie du convertisseur. Ce potentiel correspond généralement à la masse, reliée à la borne de sortie redressée de référence du pont 3.

L'inductance L0 fait partie d'un circuit magnétique 4 dont elle constitue l'enroulement principal. Ce circuit 4 comporte deux enroulements secondaires L1 et L2 ayant des nombres de spires respectivement N1 et N2 inférieurs au nombre N0 de spires de l'inductance L0. Un premier enroulement L1 du circuit magnétique 4 est connecté entre l'inductance L0 et une diode DL de roue libre dont la cathode est reliée à une borne de sortie positive 24 du convertisseur. Cette inductance L1 peut également être placée entre la cathode de la diode DL et la borne 24. Un deuxième enroulement L2 relie le noeud 22 à la borne de référence 23 en étant en série avec une diode D2, l'anode de la diode D2 étant côté masse 23. Les positions respectives de la diode D2 et de l'inductance L2 peuvent également être inversées. Enfin, une diode D1 relie le noeud 25, d'interconnexion entre l'inductance L de contrôle du di/dt et l'interrupteur K, à la borne 24, l'anode de la diode D1 étant côté noeud 25. La borne 24 est reliée à la borne de référence 23 par un condensateur C de stockage aux bornes duquel est présente la tension de sortie régulée Vout. Le condensateur C fait le cas échéant partie de la charge à alimenter par le convertisseur de puissance. Dans l'exemple de la figure 1, en supposant le point de phase de l'enroulement L0 relié à la borne 21, le point de phase de l'enroulement L1 est côté borne 22 et le point de phase de l'enroulement L2 est côté masse 23. Si par contre le point de phase de l'enroulement L0 est côté borne 22, le point de phase de l'enroulement L1 doit être côté borne 24 et le point de phase de l'enroulement L2 côté borne 22.

Lorsque l'interrupteur K est fermé, l'énergie est emmagasinée dans l'inductance L0 et la charge Q est alimentée par l'énergie stockée dans le condensateur C0. Quand l'interrupteur K est ouvert, l'inductance L0 restitue de l'énergie emmagasinée au condensateur C0 par l'intermédiaire de la diode de roue libre DL.

Le rôle de l'inductance L est de limiter d'une part les pertes dissipées liées à la décroissance de la tension et à la croissance du courant dans l'interrupteur K lors de sa fermeture et d'autre part celles liées à la diode de roue libre DL en raison d'un phénomène de charges recouvrées.

Le rôle du circuit magnétique 4 est de récupérer le courant de recouvrement de la diode DL pour le transférer dans l'inductance principale L0 et qu'il soit ensuite fourni à la charge. Pour cela, l'enroulement L1 impose, à l'ouverture de l'interrupteur K, une tension négative aux bornes de l'inductance L de façon à lui permettre de transférer l'énergie qu'elle contient au condensateur C. La diode D1 est alors polarisée en direct. L'enroulement L2 a pour rôle, lors de la fermeture de l'interrupteur K, d'imposer une tension négative aux bornes de l'inductance L, afin de transférer l'énergie qu'elle contient dans l'enroulement L2 du circuit magnétique. Cette énergie est ensuite récupérée par l'enroulement L0 qui la restitue au condensateur C lors de l'ouverture suivante de l'interrupteur.

L'interrupteur K est généralement constitué d'un transistor MOS et présente une capacité parasite C_K à ses bornes (entre drain et source). Cette capacité parasite engendre des pertes à chaque ouverture et fermeture de l'interrupteur. A la fermeture, l'énergie stockée dans la capacité parasite est dissipée dans l'interrupteur (dans sa résistance série à l'état passant). A l'ouverture, la capacité parasite emmagasine de l'énergie provoquant à nouveau des pertes dans l'interrupteur. Des pics de tension engendrent du bruit et fatiguent l'interrupteur.

Il serait souhaitable d'améliorer encore le fonctionnement d'un convertisseur de puissance pour en réduire les pertes à la commutation, et protéger l'interrupteur de découpage.

Le document JP-A-09 233808 décrit un convertisseur à découpage dans lequel la fermeture de l'interrupteur à découpage est provoquée quand la tension à ses bornes est nulle.

Le document WO 95/34120 décrit un convertisseur continu-continu et prévoit de décharger la capacité parasite intrinsèque de l'interrupteur à découpage avant sa fermeture.

Résumé

Un objet de la présente invention est de proposer un convertisseur à découpage qui pallie tout ou partie des inconvénients des convertisseurs usuels.

Un objet d'un mode de réalisation vise à adjoindre au convertisseur, un circuit visant à protéger son interrupteur de découpage contre une fatigue excessive due à l'énergie emmagasinée dans sa capacité parasite.

Un objet d'un mode de réalisation vise à diminuer les pertes à la commutation de l'interrupteur, notamment à son ouverture.

Pour atteindre tout ou partie de ces objets ainsi que d'autres, il est prévu un convertisseur à découpage comportant :

un premier circuit magnétique comportant un premier élément inductif, couplé à au moins un deuxième élément inductif et électriquement en série avec ce deuxième élément et avec une première diode entre une première de deux bornes d'entrée et une première de deux bornes de sortie ;
un premier interrupteur en série avec un troisième élément inductif entre une deuxième borne du premier élément inductif et une deuxième borne d'entrée, un noeud commun entre le premier interrupteur et le troisième élément inductif étant relié à une des bornes de sortie par une deuxième diode ; et
un circuit apte à annuler la tension aux bornes de ce premier interrupteur avant sa fermeture comportant:

- un quatrième élément inductif entre ledit noeud commun et la troisième diode ; et
- entre le quatrième élément inductif et la troisième diode, deux branches de liaison à la deuxième borne d'entrée, respectivement par un élément résistif et par un deuxième interrupteur; et

un deuxième circuit magnétique incluant le quatrième élément inductif couplé à un cinquième élément inductif, ledit cinquième élément inductif étant électriquement en série avec le quatrième élément inductif et intercalé entre lesdites branches.

Selon un mode de réalisation de la présente invention, chaque branche comporte en outre une diode.

Selon un mode de réalisation de la présente invention, le premier circuit magnétique comporte en outre un sixième élément inductif en série avec une cinquième diode et la deuxième borne d'entrée.

Il est également prévu une procédé de commande d'un tel convertisseur dans lequel le deuxième interrupteur est rendu passant avant la fermeture du premier interrupteur et est ouvert après la fermeture de ce premier interrupteur.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 qui a été décrite précédemment est un schéma électrique simplifié d'un convertisseur élévateur connu associé à un circuit d'aide à la commutation ;
la figure 2 est un schéma électrique simplifié d'un convertisseur élévateur associé à un circuit d'aide à la commutation et de récupération d'énergie de la capacité parasite de l'interrupteur de découpage permettant d'expliquer le fonctionnement global de l'invention;
la figure 3 est un schéma électrique d'un mode de réalisation préféré d'un convertisseur élévateur de tension ; et
la figure 4 illustre par des chronogrammes le fonctionnement du convertisseur de la figure 3.

De mêmes éléments ont été désignés par de mêmes références aux différentes figures.

Description détaillée

Par souci de clarté, seuls les éléments utiles à la compréhension de l'invention ont été représentés et seront décrits. En particulier, les circuits amont et aval du convertisseur à découpage n'ont pas été décrits, l'invention étant compatible avec tout circuit amont de fourniture d'une tension continue (filtrée ou non) et avec toute charge habituellement connectée en aval d'un convertisseur à découpage. De plus, la commande par modulation d'impulsions et la régulation du signal de commande de l'interrupteur à découpage n'ont pas été détaillées, l'invention étant là encore compatible avec les circuits habituels.

La figure 2 représente un convertisseur élévateur à circuit magnétique.

Comme précédemment, un interrupteur de découpage (typiquement un transistor à effet de champ, par exemple un transistor MOS de puissance) est relié par une inductance L de contrôle de son di/dt à une borne 22 d'une inductance L0 dont l'autre borne 21 est destinée à recevoir une tension d'entrée, par exemple, continue Ve. Dans la plupart des applications, la tension Ve correspond à une tension alternative redressée (filtrée ou non). L'inductance L0 constitue l'enroulement primaire d'un circuit magnétique 4. La borne 22 est reliée à une borne de sortie positive 24 par une inductance secondaire L1 du circuit magnétique 4, en série avec une diode de roue libre DL. Une deuxième inductance secondaire L2 du circuit magnétique, en série avec une diode D2, relie le noeud 22 à une borne 23 d'application du potentiel de référence (typiquement la masse) des tensions d'entrée et de sortie. Les bornes 24 et 23 sont reliées par un condensateur C, le cas échéant dans la charge (non représentée). L'interrupteur K est commandé par un circuit 1 (CTRL).

Un circuit 5 de récupération d'énergie de la capacité parasite de l'interrupteur K à sa fermeture (également désigné par circuit de protection) est intercalé entre l'anode d'une diode D1 dont la cathode est reliée à la borne 24, et le point milieu 25 entre l'inductance L et l'interrupteur K. Ce circuit 5 comporte un élément inductif L5 entre le noeud 25 et l'anode de la diode D1. L'anode 26 de la diode D1 est par ailleurs reliée à la borne 23, d'une part par une résistance R5 en série avec une diode D51 et d'autre part par un interrupteur auxiliaire K5 en série avec une diode D52. L'anode de la diode D51 est côté masse 23. L'anode de la diode D52 est côté noeud 26. L'interrupteur K5 est commandé par le circuit 1 et est rendu passant avant l'interrupteur K afin de décharger sa capacité parasite. Ainsi, lorsque l'interrupteur K est rendu passant par le circuit 1, la tension à ses bornes est nulle. Le rôle de l'inductance L5 est de récupérer l'énergie emmagasinée de la capacité parasite de l'interrupteur par résonance. La diode D52 empêche le courant de circuler par la diode substrat du transistor K5 lorsque celui-ci est bloqué. Enfin, la résistance R5 amortit les surtensions aux bornes des diodes D1 et D52 lors du blocage de la diode D1.

La valeur de l'inductance L5 est choisie pour être inférieure à la valeur de l'inductance L. Ainsi, la durée d'établissement du courant dans l'interrupteur K5 est en première approximation égale à $\frac{\pi}{2}\sqrt{L5 \cdot CK}$.

Cette durée peut donc être considérée comme dépendant essentiellement des valeurs de la capacité parasite CK de l'interrupteur principal K et de l'inductance L5.

Le circuit 5 de commutation sous tension nulle (ZVS) de la figure 2 récupère l'énergie de la capacité parasite de l'interrupteur K qui est ensuite réinjectée vers la charge et protège l'interrupteur K en assurant une fermeture alors que la tension à ses bornes est nulle.

L'emploi d'un tel circuit permet d'utiliser des fréquences de commutation plus élevées qu'avec le circuit de la figure 1. Cela améliore le rendement du convertisseur.

On aurait pu penser utiliser un circuit de protection 5 sans circuit magnétique 4. Toutefois, la combinaison proposée apporte de nombreux avantages par rapport à une solution dépourvue de circuit magnétique. En particulier, le temps de conduction de l'interrupteur K5 est rendu quasi indépendant de la puissance fournie et de la tension d'entrée (il ne dépend que des valeurs de L5 et de CK). Cela diminue les pertes en conductions dans l'interrupteur K5 qui doit autrement être dimensionné pour le pire cas. Par ailleurs, on évite un compromis entre les valeurs de la capacité parasite CK de l'interrupteur K et la résistance série à l'état passant RdsON de l'interrupteur K5.

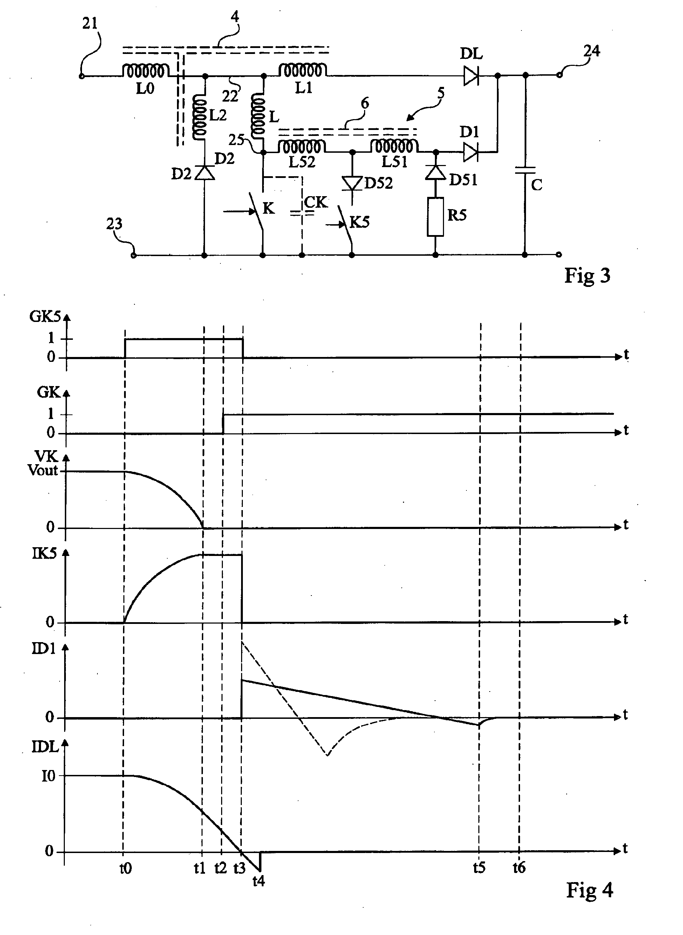

La figure 3 représente un autre mode de réalisation d'un convertisseur élévateur visant à limiter les pertes liées aux charges recouvrées lors du blocage de la diode D1.

Par rapport au mode de réalisation de la figure 2, l'inductance L5 du circuit de protection est remplacée par un circuit magnétique 6 comportant deux inductances L51 et L52 couplées et électriquement en série (inductance L52 côté noeud 25), le nombre N51 de spires de l'inductance L51 du circuit magnétique 5 est généralement inférieur au nombre N52 de spires de l'inductance L52. La valeur de l'inductance L51 est inférieure à la valeur de l'inductance L pour respecter la condition de durée donnée en relation avec la figure 2. La somme des valeurs des inductances L51 et L52 peut être supérieure à la valeur de l'inductance L. Les points de phase des inductances sont choisis pour être tous deux du même côté (côté noeud 25 ou côté diode D1).

La figure 4 représente des chronogrammes illustrant le fonctionnement du convertisseur de la figure 3 autour d'une fermeture de l'interrupteur K. Ces chronogrammes représentent respectivement un exemple d'allure des périodes de fermeture des interrupteurs K et K5 (signaux GK et GK5 arbitrairement à l'état 1 dans ces périodes de fermeture), du courant IK5 dans l'interrupteur K5, du courant ID1 dans la diode D1 et du courant IDL dans la diode de roue libre DL. Le cycle de commutation n'est pas entièrement représenté en figure 4, seul le comportement autour de la fermeture de l'interrupteur K est illustré. La fréquence de découpage employée est généralement supérieure à une centaine de kHz et est donc grande devant la fréquence (50 ou 60 Hz) de la tension alternative généralement utilisée pour l'alimentation.

On suppose qu'à un instant t0, le circuit 1 provoque la fermeture de l'interrupteur K5. Avant l'instant t0, on est donc en phase de roue libre, c'est-à-dire qu'un courant I0 supposé constant à un niveau positif (dans l'orientation arbitraire prise aux figures) circule dans la diode DL en étant restitué par les inductances L0 et L1 et charge le condensateur de sortie C. La tension aux bornes des interrupteurs K et K5 correspond approximativement au niveau Vout (les deux transistors sont bloqués). Le courant dans l'inductance L est nul et les diodes D1 et D2 sont bloquées.

A l'instant t0, on entre dans une phase de début de fermeture. Le courant provenant de l'alimentation et circulant dans l'inductance L0 se partage entre l'inductance L1 en série avec la diode DL d'une part et l'inductance L en série avec l'inductance L52 et l'interrupteur K5 d'autre part. La fermeture de l'interrupteur K5 provoque également la décharge de la capacité parasite de l'interrupteur K et annule la tension à ses bornes. Le courant dans l'interrupteur K5 croit, jusqu'à un instant t1, avec une pente essentiellement fonction de la valeur de l'inductance L52 et de la capacité parasite CK de l'interrupteur K ($t1-t0 = \frac{\pi}{2}\sqrt{L52 \cdot CK}$). La tension aux bornes de l'interrupteur K s'annule à l'instant t1. Le courant IDL dans la diode DL décroît avec une même pente. Les diodes D1 et D2 restent bloquées, de même que la diode D51. A l'instant t1, le courant restitué par l'inductance L0 est partagé entre la diode de roue libre DL et la diode D52 avec un rapport dépendant du rapport entre le nombre de spires des inductances L1, L et L52 et la valeur de la capacité CK parasite de l'interrupteur.

A un instant t2, postérieur à l'instant t1, le circuit de commande provoque la fermeture de l'interrupteur K. On voit mieux apparaître ici l'avantage que la durée entre les instants t0 et t1 puisse être considérée comme indépendante de la puissance fournie et du niveau de courant I0 qui varie à chaque période de découpage. Cela permet de paramétrer plus facilement le circuit de commande pour qu'il provoque la fermeture de l'interrupteur K le plus tôt possible et permet ainsi d'augmenter la fréquence des cycles de découpage.

L'interrupteur K5 est ouvert à un instant t3, juste après l'instant t2. L'intervalle entre les instants t2 et t3 est choisi le plus faible possible en fonction des tolérances de fonctionnement du circuit de commande pour éviter une ouverture de l'interrupteur K5 avant la fermeture de l'interrupteur K.

A l'instant t3, le courant IK5 dans l'interrupteur K5 disparaît instantanément pour être transféré de l'inductance L52 vers l'inductance L51 grâce au circuit magnétique couplé 6, avec une amplitude qui dépend du rapport entre les nombres de spires N52 et N51. On retrouve donc ce pic de courant qui apparaît dans la diode D1 alors polarisée en direct. Grâce à la fermeture sous tension nulle, l'amplitude du pic de courant dans la diode ne dépend plus que du courant dans l'inductance du circuit 5 à l'instant de fermeture. De plus, grâce à la présence du circuit magnétique 6, l'amplitude du pic est réduite d'un facteur N52/(N51+N52) par rapport au pic qui apparaît dans le circuit de la figure 2 et qui est d'une amplitude correspondant à l'amplitude du courant dans l'interrupteur K5 au moment de son ouverture. Or, plus la vitesse de décroissance et le pic de courant sont faibles dans D1, plus la quantité de charges recouvrées au blocage de la diode est faible, donc les pertes liées à l'évacuation de ces charges. Ce phénomène est illustré sur le chronogramme du courant ID1, où un exemple d'allure du courant avec le circuit de la figure 2 est représenté en pointillés pour être comparé à l'allure (en trait plein) avec le circuit de la figure 3. La pente de décroissance du courant ID1 correspond au rapport entre la tension de sortie (aux bornes du condensateur C) et la somme des valeurs des inductances L51 et L52. Pour un intervalle de temps donné entre les instants t0 et t1, le courant dans la diode D1 met donc plus longtemps à disparaître avec le circuit de la figure 3 qu'avec le circuit de la figure 2. Cela n'est toutefois pas gênant car cela correspond à une période d'accumulation d'énergie dans les inductances L0 et L1.

A un instant t5 où le courant dans la diode D1 atteint son maximum inverse IRM (dû à son recouvrement) chargeant les inductances L51 et L52 sous forme magnétique à une valeur $\frac{1}{2} \cdot (L51 + L52) \cdot IRM^2$, où L51 et L52 désignent les valeurs respectives des inductance L51 et L52, la diode D51 devient polarisée en direct. Cette énergie est alors dissipée dans la résistance R5 jusqu'à un instant t6. A l'instant t5, la tension aux bornes de l'interrupteur K5 (ouvert depuis l'instant t3) s'annule. L'ouverture de l'interrupteur K peut intervenir à partir de l'instant t6.

Côté circuit magnétique 4, à un instant t4 (entre les instants t3 et t5) où la diode D2 devient passante, le courant (négatif) dans la diode DL s'interrompt brutalement, et le courant correspondant est réinjecté dans l'inductance L2. On assiste alors à une conduction de la diode D2 qui sert d'élément de roue libre pour transférer l'énergie de l'inductance L dans le circuit magnétique 4 alors déconnecté de la charge Q. Le fonctionnement du circuit magnétique 4 n'est pas modifié par rapport au fonctionnement décrit dans le brevet 6,987,379 susmentionné.

Divers modes de réalisation avec diverses variantes ont été décrits ci-dessus. On notera que l'homme de l'art pourra combiner divers éléments de ces divers modes de réalisation et variantes sans faire preuve d'activité inventive. En particulier, bien que l'invention ait été décrite en relation avec un exemple de conversion d'une tension positive, elle se transpose sans difficulté à un convertisseur d'une tension négative par rapport à la masse.

De plus, elle se transpose également à un convertisseur abaisseur de tension. Pour cela, l'élément L0 est connecté à la première borne 24 et est en série, avec l'inductance L1 et la diode DL entre cette borne et une première borne d'entrée correspondant ici à la masse 23 (anode de la diode DL côté masse). L'interrupteur K en série avec l'inductance L relie la (deuxième) borne 22 de l'inductance L0 à une deuxième borne d'entrée (ici la borne positive 21). La diode D1 relie le noeud commun 25 à la borne 23, et l'inductance L2 en série avec la diode D2 relie la borne 22 à la borne 21. Les inductances L51 et L52 en série avec l'inductance D1 relient le noeud 25 à la masse 23 et les branches D52, K5 et D51, R5 sont reliées à la borne 21.

En outre, le choix des valeurs des composants et des conditions de conduction des interrupteurs en fonction de la charge et de la tension d'entrée est à la portée de l'homme du métier à partir des indications fonctionnelles données ci-dessus.

## Revendications

1. Convertisseur à découpage comportant :

   un premier circuit magnétique (4) comportant un premier élément inductif (L0), couplé à au moins un deuxième élément inductif (L1) et électriquement en série avec ce deuxième élément et avec une première diode (DL) entre une première de deux bornes d'entrée (21, 23) et une première (24) de deux bornes de sortie ;
   un premier interrupteur (K) en série avec un troisième élément inductif (L) entre une deuxième borne (22) du premier élément inductif et une deuxième borne d'entrée (23), un noeud commun (25) entre le premier interrupteur et le troisième élément inductif étant relié à une des bornes de sortie par une deuxième diode (D1), **caractérisé en ce qu'**il comporte en outre :

   un circuit (5) apte à annuler la tension aux bornes de ce premier interrupteur avant sa fermeture, et comportant :

   - un quatrième élément inductif (L52) entre ledit noeud commun (25) et la deuxième diode (D1) ; et
   - entre le quatrième élément inductif (L52) et la deuxième diode (D1), deux branches de liaison à la deuxième borne d'entrée (23), respectivement par un élément résistif (R5) et par un deuxième interrupteur (K5) ; et

   un deuxième circuit magnétique (6) incluant le quatrième élément inductif (L52) couplé à un cinquième élément inductif (L51), ledit cinquième élément inductif étant électriquement en série avec le quatrième élément inductif et intercalé entre lesdites branches.

2. Convertisseur selon la revendication 1, dans lequel chaque branche comporte en outre une diode (D51, D52).

3. Convertisseur selon l'une quelconque des revendications 1 et 2, dans lequel le premier circuit magnétique (4) comporte en outre un sixième élément inductif (L2) en série avec une cinquième diode (D2) et la deuxième borne d'entrée (23).

4. Procédé de commande d'un convertisseur selon l'une quelconque des revendications 1 à 3, dans lequel le deuxième interrupteur (K5) est rendu passant avant la fermeture du premier interrupteur (K) et est ouvert après la fermeture de ce premier interrupteur.

## Patentansprüche

1. Ein Schaltwandler, welches folgendes aufweist:

   eine erste Magnetschaltung (4), die ein erstes induktives Element (L0) aufweist und zwar gekoppelt mit mindestens einem zweiten induktiven Element (L1) und elektrisch in Serie mit diesem zweiten Element und mit einer ersten Diode (DL) zwischen einem ersten von zwei Eingangsanschlüssen (21, 23) und einem ersten (24) der zwei Ausgangsanschlüsse;
   einen ersten Schalter (K) in Serie mit einem dritten induktiven Element (L) zwischen einem zweiten Anschluss (22) des ersten induktiven Elements und einem zweiten Eingangsanschluss (23), ein gemeinsamer Knoten (25) zwischen dem ersten Schalter und dem dritten induktiven Element gekoppelt mit einem der Ausgangsanschlüsse durch eine zweite Diode (D1); **dadurch gekennzeichnet dass** ferner folgendes vorgesehen ist:

   eine Schaltung (5) zur Löschung der Spannung an diesem ersten Schalter vor seiner Einschaltung und zwar folgendes aufweisend:

   - ein viertes induktives Element (L52) zwischen dem gemeinsamen Knoten (25) und der zweite Diode (D1); und
   - zwischen dem vierten induktiven Element (L52) und der zweite Diode (D1) zwei Verbindungszweige zu dem zweiten Eingangsanschluss (23) und zwar durch ein Widerstandselement (R5) bzw. durch einen zweiten Schalter (K5); und
   - eine zweite Magnetschaltung (6) die das vierte induktive Element (L52) aufweist und zwar gekoppelt mit einem fünften induktiven Element (L51), wobei das fünfte induktive Element elektrisch in Serie mit dem vierten induktiven Element steht und angeordnet ist zwischen den erwähnten Zweigen.

**2.** Der Wandler nach Anspruch 1, wobei jeder Zweig ferner eine Diode (D51, D52) aufweist.

**3.** Der Wandler nach Anspruch 1 oder 2, wobei die erste Magnetschaltung (4) ferner ein sechstes induktives Element (L2) in Serie mit einer fünften Diode (D2) und dem zweiten Eingangsanschluss (23) aufweist.

**4.** Ein Verfahren zur Steuerung des Wandlers nach einem der Ansprüche 1 bis 3, wobei der zweite Schalter (K5) eingeschaltet ist bevor der erste Schalter (K) eingeschaltet wird und abgeschaltet ist nach dem Einschalten dieses ersten Schalters.

**Claims**

**1.** A switched-mode converter comprising:

a first magnetic circuit (4) comprising a first inductive element (L0), coupled to at least one second inductive element (L1) and electrically in series with this second element and with a first diode (DL) between a first one of two input terminals (21, 23) and a first one (24) of two output terminals;
a first switch (K) in series with a third inductive element (L) between a second terminal (22) of the first inductive element and a second input terminal (23), a common node (25) between the first switch and the third inductive element being coupled to one of the output terminals by a second diode (D1);
**characterized in that** it further comprises:

a circuit (5) capable of canceling the voltage across this first switch before its turning-on, and comprising:

- a fourth inductive element (L52) between said common node (25) and the second diode (D1); and
- between the fourth inductive element (L52) and the second diode (D1), two branches of connection to the second input terminal (23), respectively by a resistive element (R5) and by a second switch (K5); and
- a second magnetic circuit (6) comprising the fourth inductive element (L52) coupled to a fifth inductive element (L51), said fifth inductive element being electrically in series with the fourth inductive element and interposed between said branches.

**2.** The converter of claim 1, wherein each branch further comprises a diode (D51, D52).

**3.** The converter of claim 1 or 2, wherein the first magnetic circuit (4) further comprises a sixth inductive element (L2) in series with a fifth diode (D2) and the second input terminal (23) .

**4.** A method for controlling the converter of any of claims 1 to 3, wherein the second switch (K5) is turned on before the turning-on of the first switch (K) and is turned off after the turning-on of this first switch.

Fig 1

Fig 2

Fig 3

Fig 4

9

**EP 2 230 754 B1**

## RÉFÉRENCES CITÉES DANS LA DESCRIPTION

**Documents brevets cités dans la description**

- JP 9233808 A
- WO 9534120 A